# FASCICULE DE BREVET EUROPEEN

(11) **EP 1 490 933 B1**
(45) Date de publication et mention de la délivrance du brevet: **01.03.2006**
(21) Numéro de dépôt: 03735790.2
(22) Date de dépôt: 26.03.2003
(51) Int. Cl.: H01S 3/23, H01S 3/117

(54) **CAVITE LASER DE FORTE PUISSANCE CRETE ET ASSOCIATION DE PLUISIEURS DE CES CAVITES**
HOCHLEISTUNGSLASERRESONATOR UND ANORDNUNG AUS MEHREREN SOLCHER RESONATOREN
HIGH PEAK POWER LASER CAVITY AND ASSEMBLY OF SEVERAL SUCH CAVITIES

(30) Priorité: 28.03.2002 FR 0203964
(43) Date de publication de la demande: 29.12.2004
(73) Titulaire: COMMISSARIAT A L'ENERGIE ATOMIQUE, 75752 Paris Cédex 15 (FR)
(72) Inventeur: THRO, Pierre Yves, F-91190 Gif sur Yvette (FR); WEULERSSE, Jean-Marc, F-91120 Palaiseau (FR); GILBERT, Michel, F-91440 Bures sur Yvette (FR)
(74) Mandataire: Poulin, Gérard
(86) Numéro de dépôt international: PCT/FR2003/000956
(87) Numéro de publication internationale: WO 2003/084014

(56) Documents cités:
- EP-A- 0 468 175
- DE-A- 1 614 647
- US-A- 6 016 324
- MEHL O ET AL: "Compact 300-W diode-pumped oscillator with 500 kW pulse peak power and external frequency doubling" CONFERENCE ON LASERS AND ELECTRO-OPTICS. (CLEO 2001). TECHNICAL DIGEST. POSTCONFERENCE EDITION. BALTIMORE, MD, MAY 6-11, 2001, TRENDS IN OPTICS AND PHOTONICS. (TOPS), US, WASHINGTON, WA: OSA, US, vol. 56, 6 mai 2001 (2001-05-06), pages 421-422, XP010560018 ISBN: 1-55752-662-1 cité dans la demande

## Description

### DOMAINE TECHNIQUE

La présente invention concerne une cavité laser (en anglais « optical resonator ») de forte puissance crête et de puissance moyenne et de cadence de récurrence élevées, tout en étant de coût et de complexité minimisés. Elle concerne également l'association de plusieurs de ces cavités, notamment pour exciter un générateur de lumière dans l'extrême ultraviolet.

L'invention s'applique ainsi plus particulièrement à la génération de lumière dans le domaine extrême ultraviolet.

Les rayonnements appartenant à ce domaine, que l'on appelle également « rayonnements EUV », ont des longueurs d'onde qui vont de 8 nanomètres à 25 nanomètres.

Les rayonnements EUV que l'on peut obtenir en faisant interagir des impulsions lumineuses, engendrées avec le dispositif objet de l'invention, et une cible appropriée ont de nombreuses applications, notamment en science des matériaux, en microscopie et tout particulièrement en microlithographie, pour fabriquer des circuits intégrés à très haut degré d'intégration. Pour cette dernière application, il est particulièrement avantageux d'avoir une cadence de récurrence élevée, ce qui est très difficile à obtenir pour des lasers de forte puissance crête.

L'invention s'applique à tout domaine qui nécessite un laser d'excitation du même genre que ceux dont on a besoin en microlithographie.

### ETAT DE LA TECHNIQUE ANTERIEURE

La lithographie EUV est nécessaire en microélectronique pour la réalisation de circuits intégrés dont les dimensions sont inférieures à 0,1 micromètre. Parmi les sources de rayonnement EUV, plusieurs de ces sources utilisent un plasma engendré au moyen d'un laser.

On cherche en particulier à engendrer un rayonnement ultraviolet de longueur d'onde environ égale à 13nm en excitant un jet de xénon avec une source laser intense.

Pour que cette source laser soit satisfaisante du point de vue économique, trois conditions doivent être réunies :
- la puissance crête de la lumière laser doit être très importante (de l'ordre de 10¹¹ W/cm²) afin de créer un plasma suffisamment émissif autour de 13nm,
- la cadence de répétition doit être élevée (plusieurs kilohertz) pour réaliser le plus grand nombre de tranches de semiconducteur (« wafers ») à l'heure, et
- la source laser doit être simple, avoir un coût d'investissement raisonnable et un coût de fonctionnement faible.

Pour la création du plasma, il faut donc disposer d'un laser engendrant un fort éclairement-crête. On utilise à cet effet un laser impulsionnel, délivrant par exemple une énergie de l'ordre de 300 mJ par impulsion ou plus.

Indiquons dès à présent que l'invention utilise par exemple des lasers YAG dopés au néodyme, lasers qui ont connu de nombreux développements dans bien des domaines industriels. Cependant, d'autres lasers à solide, c'est à dire dont le milieu amplificateur est solide, sont utilisables dans la présente invention.

On reviendra sur ce point par la suite.

Pour obtenir une très bonne stabilité de l'énergie tir à tir, il est connu d'utiliser un pompage par diodes lasers.

En outre, pour obtenir la puissance-crête nécessaire à la génération de rayonnements EUV destiné à la photolithographie, il est connu d'utiliser des diodes impulsionnelles.

A ce sujet on se reportera au document suivant :
[1] Article de H. Rieger et al., High brightness and power Nd:YAG laser, Advanced solid-state lasers, 1999, Boston MA, p.49 à 53.
   Ce document divulgue un dispositif pour la photolithographie, générant des impulsions laser de forte amplitude crête à une cadence de récurrence relativement faible.
   Également, pour obtenir la puissance-crête nécessaire, il est connu d'utiliser un oscillateur et des amplificateurs. Il en résulte un laser complexe et coûteux.
   A ce sujet, on se reportera au document suivant :
[2] Article de G. Holleman et al., Modeling high brightness kW solid-state lasers, SPIE Vol. 2989, p.15 à 22.
   Ce document mentionne deux besoins en lasers de puissance correspondant à deux technologies opposées :
   d'une part, les applications de soudage, d'usinage ou de traitement des matériaux, qui nécessitent des lasers émettant des impulsions longues, obtenues par des technologies très simples, et
   d'autre part, les applications de photolithographie qui nécessitent des impulsions brèves et, si possible, à haute cadence, obtenues par une technologie très sophistiquée et coûteuse, utilisant notamment deux étages d'amplification optique.

   On se reportera aussi au document suivant, qui vise à obtenir un dispositif laser de forte puissance crête :
[3] Article de G. Kubiak et al., Scale-up of a cluster jet laser plasma source for Extreme Ultraviolet lithography, SPIE Vol. 3676, p.669 à 678.
   Le dispositif décrit dans ce document [3] recourt à des lasers YAG dopés au néodyme, pompés par des diodes pulsées, comme dans le reste de l'art antérieur concernant la photolithographie. Il utilise en outre des amplificateurs optiques complexes et coûteux. De plus, la cadence de récurrence visée dans ce document [3] est de 6 kHz, pour une énergie par impulsion de 280 mJ.
   Une version perfectionnée de ce laser fait l'objet du document [6] discuté ci-dessous.
   On se reportera aussi au document suivant :
[4] Article de H. Rieger et al., High brightness and power Nd : YAG Laser, OSA Trends in Optics and Photonics, Vol.26, from the topical Meeting january 31, february 3 1999 à Boston, Optical Society of America, p. 49 à 53
   qui décrit sommairement un dispositif ayant un oscillateur maître de très faible puissance délivrant des impulsions de 1 mJ à une fréquence maximale de 1 kHz (donc de puissance moyenne au plus égale à 1W), suivi d'une chaîne d'amplification complexe et coûteuse. L'essentiel de l'article consiste à étudier la dégradation de la qualité du faisceau dans cette chaîne d'amplification. Le dispositif décrit reste loin des performances requises pour une source EUV destinée à la microlithographie, à la fois pour la puissance moyenne et pour la fréquence de répétition.
   En fait, les caractéristiques requises pour un dispositif laser apte à exciter une source intense de rayonnement EUV qui soit compatible avec les besoins de l'industrie des semiconducteurs ont été standardisées à l'échelle mondiale, sous la forme d'un cahier des charges, et de nombreuses tentatives ont été faites pour satisfaire ce cahier des charges.
   Cependant, jusqu'à présent, toutes ces tentatives ont échoué.
   Parmi les contraintes fortes du cahier des charges figure évidemment l'aptitude à engendrer de fortes intensités crête avec une cadence de récurrence très élevée. Mais il y a aussi la nécessité d'obtenir un faisceau de bonne qualité, caractérisé par une valeur la plus basse possible de la grandeur M² qui est définie, à une constante près, comme le produit du diamètre du faisceau par l'angle de sa divergence.
   La limite inférieure théorique de M² est égale à 1 mais plus la puissance du laser est élevée, plus la valeur de M² augmente. Elle atteint couramment plusieurs dizaines avec un laser YAG dopé au néodyme, également appelé laser Nd : YAG.
   Le cahier des charges mentionné plus haut impose M²≤10.
   D'autre documents plus récents divulguent des dispositifs visant à satisfaire à ce cahier des charges
[5] Article de K. Nicklaus et al., Industry-Laser Based Short Pulse Diode Pumped Solid State Power Amplifier With kW Average Power, OSA Trends in Optics and Photonics, Vol.50, Advanced Solid-State Lasers, Christopher Marshall, ed., Optical Society of America, 2001, p. 388 à 391
   qui décrit un dispositif dont la cavité laser délivre des impulsions de 4 mJ à 2 kHz (ou 8 mJ à 1 kHz) à un ensemble de deux préamplificateurs à double passage. Le trajet de retour du faisceau est défléchi par un cube polariseur vers une ligne de deux amplificateurs, dont la sortie délivre des impulsions de 76 mJ (la structure d'un tel dispositif est dite MOPA : Master Oscillator Power Amplifier).
[6] Article de D.A. Tichenor et al., EUV Engineering Test Stand, Emerging Lithographic Technologies IV, Elisabeth A. Dobisz, Editor, Proceedings of SPIE Vol. 3997 (2000), p.48 à 69.
   Cet article décrit une installation laser utilisant trois modules identiques mis en parallèle, chacun de ces modules étant constitué du laser réalisé par la Société TRW et décrit dans le document suivant.
[7] Active Tracker Laser (ATLAS), Randall St. Pierre et al., OSA TOPS, Vol. 10, Advanced Solid State Lasers,1997, p. 288 à 291
   La cavité laser solide au Nd : YAG décrite dans le document [7] fournit des impulsions de 1,6 mJ à 2,5 kHz, qui sont amplifiées dans une structure à double passage délivrant en sortie des impulsions de 276 mJ. Une version un peu antérieure de ce laser TRW a été décrite dans le document [3].
   Selon les documents [5] et [6], afin d'obtenir une puissance élevée avec une faible valeur M², et des impulsions très courtes, on engendre des impulsions lumineuses dans un laser de base comportant un très petit oscillateur de faible énergie (moins de 10 mJ par impulsion) et de faible puissance moyenne (moins de 15W), et on les amplifie par de nombreux passages dans des étages amplificateurs à barreaux ou à plaques.
   On se heurte alors au fait que, lorsque la puissance lumineuse incidente est faible devant la fluence de saturation du barreau laser utilisé (et en particulier pour des fluences incidentes inférieures à 200mJ/cm² pour le Nd : YAG), l'amplification apportée par le barreau est très faible. Il faut alors un nombre important de barreaux amplificateurs, qui sont extrêmement coûteux , et plusieurs dizaines de diodes elles aussi très coûteuses, l'ensemble ayant un rendement énergétique très faible.
   Afin de limiter le coût de l'installation, le ou les premiers étages sont généralement parcourus deux fois (trajet aller-retour, d'où l'appellation d'amplificateur double passage), ce qui impose de travailler avec un faisceau polarisé et d'utiliser un polariseur (par exemple un cube polariseur) pour que le trajet de retour ne revienne pas sur l'oscillateur mais soit aiguillé vers un autre chemin optique où l'amplification sera poursuivie.
   Cette nécessité de polariser le faisceau induit un problème supplémentaire dans le cas où l'amplification double passage utilise comme barreau amplificateur un matériau isotrope comme par exemple le Nd : YAG ou le Yb : YAG. De tels matériaux voient leur isotropie se modifier au moment du pompage, ce qui dégrade la polarisation du faisceau incident.
   Ainsi, si des dispositifs complexes n'étaient pas mis en place pour limiter ce phénomène, la polarisation ne serait pas suffisamment maintenue, et une partie importante de l'énergie du faisceau (environ 25% pour le Nd : YAG) serait perdue lorsque le faisceau de retour entrerait dans le polariseur et risquerait de détruire l'oscillateur.
   Ces dispositifs complexes, c'est à dire essentiellement des associations de rotateurs de polarisation et de lames de phase judicieusement placées, limitent à une valeur faible la puissance du faisceau retournant vers l'oscillateur (environ 2,4% pour le Nd : YAG).
   Ainsi, pour résoudre le problème de l'obtention d'un dispositif laser apte à exciter une source intense de rayonnement EUV qui soit compatible avec les besoins de l'industrie des semi-conducteurs, les auteurs du document [5], mais aussi ceux des documents [6] et [7], ont élaboré des impulsions les plus parfaites possibles mais de très faible puissance, puis ont multiplié le nombre d'amplificateurs et ont concentré tous leurs efforts sur la recherche de moyens permettant de limiter, dans ces amplificateurs, les pertes par dépolarisation.
   Cette méthode conduit à des dispositifs complexes, coûteux, de faible rendement énergétique. En outre, pour les dispositifs décrits dans les documents [5] et [7], les principaux éléments sont placés en série. Ainsi toute panne de l'un d'eux affecte la totalité du dispositif.
   Une autre méthode a été proposée dans le document suivant :
[8] Compact 300-W diode-pumped oscillator with 500kW pulse peak power and external frequency doubling, Oliver Mehl et al., OSA trends in Optics and Photonics (TOPS), Vol. 56, Conference on Lasers and Electro-Optics (CLEO 2001) 6-11 mai 2001, Technical Digest, pp. 421-422.
   Ce document décrit un laser Nd : YAG comprenant, dans une cavité laser, deux barreaux en Nd : YAG, un rotateur de polarisation entre ces barreaux, deux modulateurs acousto-optiques respectivement de part et d'autre des deux barreaux et une lentille divergente entre chaque modulateur et le barreau correspondant.
   La puissance moyenne de sortie de la cavité du laser est de 260 W , avec une cadence de récurrence de 10 kHz.
   Toutefois la réalisation décrite dans ce document ne prend pas en compte un problème important lié aux dispositifs de déclenchement des impulsions lumineuses, notamment acousto-optiques utilisés dans le laser décrit dans ce document : leur fonctionnement dépend de la divergence du faisceau laser.
   Les déclencheurs acousto-optiques comportent essentiellement un cristal acousto-optique et un dispositif de commande, et fonctionnent comme suit.
   Lorsqu'il reçoit un signal électrique, le dispositif de commande émet dans le cristal une onde d'excitation radio-fréquence, qui génère dans ce cristal un réseau de Bragg. En l'absence d'excitation, ce cristal laisse passer les rayons incidents, qui, dans les conditions nominales de fonctionnement n'arrivent pas selon la normale à la face d'entré du cristal, mais en faisant avec elle un angle de Bragg.
   Lorsque la commande est activée, l'onde radio-fréquence génère le réseau de Bragg, qui défléchit alors les rayons lumineux incidents ; l'angle de déflexion est suffisant pour que ces rayons sortent de la cavité laser, ce qui correspond pour le laser à une coupure du faisceau.
   Lorsque des rayons lumineux arrivent sur la face d'entrée du cristal en s'écartant de l'angle de Bragg, ils ne peuvent plus être défléchis convenablement, notamment s'ils s'en écartent d'un angle limite ou supérieur à cet angle limite.
   La valeur de cet angle limite est pratiquement la même que la valeur de l'angle qui existe entre les directions des faisceaux diffractés au premier et au second ordre par le réseau de Bragg formé dans ce cristal lorsqu'il est excité (typiquement environ 4 mrad) .
   Les rayons dont l'angle d'incidence est voisin de cet angle ne sont pas interceptés correctement lorsque le cristal est excité. Les rayons dont l'incidence dépasse cet angle ne sont pas non plus défléchis convenablement, mais en outre ils reviennent vers la partie centrale de la cavité laser puisque leur incidence est incluse dans l'acceptance angulaire de cette cavité.
   Ils font alors émettre la cavité de manière non voulue, ce qui génère en sortie l'émission d'une certaine puissance de lumière laser continue. Le fonctionnement devient erratique, et à cette émission laser continue se superposent, en sortie de la cavité, des impulsions instables en amplitude et en durée.
   Pour une même divergence du faisceau, l'instabilité croit lorsque la puissance impulsionnelle demandée à la cavité augmente.

### EXPOSÉ DE L'INVENTION

La présente invention a pour but de résoudre à la fois les problèmes inhérents aux structure MOPA mises en oeuvre dans les réalisations décrites par les documents [5] à [7], et les problèmes inhérents aux structures ayant un oscillateur délivrant une puissance élevée mais dont la stabilité est affectée par les limitations des déclencheurs acousto-optiques, comme dans la réalisation décrite dans le document [8].

L'invention vise à les résoudre, au moyen d'une cavité laser susceptible d'avoir une forte puissance crête et une cadence de récurrence élevée, et au moyen de l'association de cette cavité avec d'autre cavités identiques pour constituer un dispositif laser qui permet d'atteindre des performances plus élevées en ce qui concerne la puissance crête, que les dispositifs divulgués par les documents [5] à [8], tout en étant moins complexe, moins coûteux et de fonctionnement plus fiable .

Il convient en outre de noter que les dispositifs lasers divulgués par le document [5] visent à obtenir des durées d'impulsions courtes, de 5ns à 20ns, ce que l'homme du métier considère comme favorable à l'obtention d'un plasma très émissif.

De façon précise, la présente invention a pour objet une cavité laser (en anglais : "optical resonator") à milieu amplificateur solide, cette cavité laser étant impulsionnelle et pompée par des diodes fonctionnant de façon continue, caractérisée en ce qu'elle comprend :
- au moins deux barreaux laser,
- au moins un moyen de déclenchement d'impulsions lumineuses, ce moyen de déclenchement étant situé dans la partie de la cavité où le faisceau laser engendré par la cavité diverge le moins, et
- deux miroirs qui délimitent cette cavité, l'un étant hautement réfléchissant et l'autre partiellement réfléchissant .

Dans le cas le plus simple d'une cavité à deux barreaux laser, la partie de la cavité où le faisceau diverge le moins est la partie située entre les deux barreaux.

A l'opposé, les parties de la cavité situées à l'extérieur des barreaux, entre l'un de barreaux et l'un des miroirs de la cavité, sont les parties où le faisceau diverge le plus.

La réalisation décrite par le document [8] place dans ces dernières les moyens de déclenchement des impulsions lumineuses, ce qui les expose aux dysfonctionnements évoqués dans l'état de la technique antérieure.

Si les barreaux laser sont en matériau isotrope comme le Nd : YAG ou le Yb : YAG, il est nécessaire, pour obtenir la qualité de faisceau spécifiée pour l'industrie de la microlithographie, d'ajouter dans la cavité, sur le trajet du faisceau, un moyen de rotation de la polarisation, dans chacun des espaces constitués par deux barreaux successifs, cette rotation étant préférentiellement de 90°.

De façon avantageuse, on corrige la légère convergence que produisent certains barreaux laser, notamment en Nd : YAG, en plaçant sur le faisceau, au milieu de chaque intervalle entre deux barreaux adjacents, une lentille ayant un effet opposé sur la convergence.

Selon un mode de réalisation préféré du dispositif objet de l'invention, le matériau laser dont sont faits les barreaux laser est choisi dans le groupe comprenant Nd : YAG, Nd : YLF, Nd : YALO, Yb : YAG, Nd : ScO₃ et Yb : Y₂O₃.

De préférence, la cavité objet de l'invention comprend deux barreaux en matériau laser, de préférence sensiblement identiques, des moyens de rotation de polarisation placés dans la cavité, entre ces deux barreaux, et deux moyens de déclenchement des impulsions, placés entre les deux barreaux, de part et d'autre des moyens de rotation de polarisation

De préférence, les moyens de déclenchement sont de type acousto-optique.

La cavité laser selon l'invention peut, selon une variante de réalisation, être associée à un ou plusieurs amplificateurs laser à simple passage, pompés par diodes, le barreau de chaque amplificateur étant sollicité sur toute sa longueur à la fluence de saturation du matériau du barreau ou au dessus de cette fluence.

De façon préférentielle, cette fluence atteint au moins trois fois la fluence de saturation du matériau.

Fonctionnellement, la cavité laser est caractérisée par son aptitude à délivrer, de manière stable, une fluence élevée, sans qu'il soit nécessaire de faire converger le faisceau qu'elle engendre. Elle peut conserver le parallélisme de ce faisceau et atteindre ou dépasser cette fluence de saturation sur toute la longueur du barreau.

Dans l'application préférentielle qui sera détaillée ultérieurement, cette fluence vaut même une dizaine de fois la fluence de saturation du matériau.

L'invention concerne aussi l'association d'au moins trois cavités du type ci-dessus, disposées en parallèle mais dont les faisceaux qu'elles engendrent sont dirigés vers une même cible.

Le dispositif laser résultant de cette association de ces cavités est caractérisé en ce qu'il comprend :
- au moins trois cavités laser (en anglais : "optical resonators") impulsionnelles, à milieu amplificateur solide, ces cavités étant conformes à la cavité laser objet de l'invention, et
- des moyens optiques d'envoi de ces impulsions lumineuses sensiblement au même endroit d'une cible et sensiblement en même temps à cet endroit,
   et en ce que le dispositif comprend en outre des moyens de commande des cavités laser impulsionnelles, ces moyens de commande étant prévus pour que toutes les impulsions parviennent sur la cible quasiment à l'instant voulu avec une précision meilleure que 5ns, et préférentiellement meilleure que 1ns.

Selon une variante, les cavités lasers sont associées à un ou plusieurs amplificateurs à simple passage.

Selon un mode de réalisation particulier du dispositif objet de l'invention, les moyens de déclenchement de chaque cavité laser impulsionnelle comprennent deux déclencheurs placés dans cette cavité, de part et d'autre des moyens de rotation de polarisation, entre ces derniers et les barreaux en matériau laser.

Selon un mode de réalisation particulier de l'invention, les moyens d'envoi des impulsions lumineuses comprennent des moyens pour envoyer ces impulsions lumineuses sur la cible suivant le même trajet.

Selon un mode de réalisation particulier du dispositif objet de l'invention, ce dispositif comprend en outre des moyens de modification de la répartition spatiale de l'impulsion lumineuse résultant de l'addition des impulsions lumineuses fournies par les cavités laser.

Selon un autre mode de réalisation particulier, les moyens de commande des cavités laser sont en outre aptes à modifier la répartition temporelle de l'impulsion lumineuse résultant de l'addition des impulsions lumineuses fournies par les cavités laser, afin de créer des impulsions composites.

Selon un mode de réalisation particulier de l'invention, le profil de chaque impulsion composite comporte une première impulsion d'allumage du plasma destiné à être créé par interaction des impulsions lumineuses avec la cible, un intervalle de temps où l'énergie lumineuse émise par le laser est minimale pendant la croissance du plasma, puis une seconde impulsion, composée de plusieurs impulsions élémentaires, selon une séquence fonction de la croissance du plasma.

Dans le cas où l'on crée les impulsions composites, le dispositif objet de l'invention est de préférence apte à envoyer un premier faisceau très focalisé sur la cible, puis à appliquer le reste de l'énergie lumineuse sur la cible avec une focalisation plus large.

La cible sur laquelle on envoie les impulsions lumineuses émises par les cavités laser du dispositif objet de l'invention peut être prévue pour fournir une lumière dans le domaine extrême ultraviolet par interaction avec ces impulsions lumineuses.

Cependant, la présente invention n'est pas limitée à l'obtention d'un rayonnement EUV. Elle s'applique à tout domaine où l'on a besoin de faisceaux lasers à forte puissance crête, dirigés sur une cible.

Dans la présente invention, on utilise une superposition spatiale et, dans un mode de réalisation particulier, un séquencement temporel.

Par « superposition spatiale », on entend la superposition d'une pluralité de faisceaux lasers sensiblement au même endroit de la cible, sensiblement au même moment.

« Sensiblement au même moment », signifie que les décalages temporels entre les diverses impulsions élémentaires respectivement fournies par les cavités laser du dispositif laser sont faibles devant la période de récurrence de ces cavités laser. Cette superposition permet de multiplier l'énergie par impulsion et les puissances de crête.

Comme on le verra plus loin, une souplesse d'utilisation peut être obtenue avec une superposition des faisceaux lasers presque au même endroit et presque en même temps. Cette souplesse d'utilisation permet d'adapter le faisceau laser résultant aux exigences du plasma.

Dans la présente invention, les points (a) à (c) qui suivent sont importants.

### a) La superposition spatiale

Elle permet d'augmenter la puissance crête et de disposer d'une grande liberté de modification de la répartition spatiale de l'impulsion lumineuse qui résulte de l'addition des impulsions lumineuses élémentaires émises par les cavités laser.

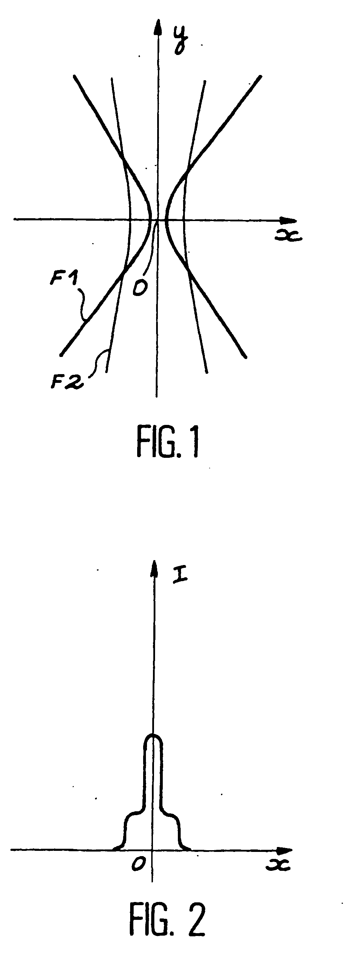

Par exemple, l'utilisation d'une impulsion lumineuse plus focalisée que les autres, utilisation qui est mise en oeuvre dans un mode de réalisation préféré de l'invention, permet d'obtenir un éclairement localement plus grand, comme le montrent schématiquement les figures 1 et 2 où l'on ne considère, pour simplifier, que deux faisceaux.

Un premier faisceau lumineux F1 et un deuxième faisceau lumineux F2 sont vus en coupe sur la figure 1, dans un plan qui est défini par deux axes perpendiculaires Ox et Oy, l'axe commun aux deux faisceaux étant l'axe Oy.

Les deux faisceaux ont sensiblement une symétrie de révolution autour de cet axe Oy et sont focalisés au voisinage du point O, sensiblement dans le plan d'observation qui est défini par l'axe Oy et par un axe perpendiculaire aux axes Ox et Oy et qui passe par le point O.

Les focalisations des deux faisceaux sont différentes, le premier faisceau F1 étant plus focalisé que le second F2.

La figure 2 montre les variations de l'éclairement I dans le plan d'observation en fonction de l'abscisse x comptée sur l'axe Ox.

Si le faisceau F1 est cinq fois plus focalisé que le faisceau F2, l'éclairement que produit ce faisceau F1 sur l'axe Oy est multiplié par vingt cinq par rapport à celui qui est produit par ce faisceau F1 lorsque les deux faisceaux ont la même puissance. Mais il convient de noter que, dans la présente invention, on peut utiliser des faisceaux dont les puissances sont identiques ou, au contraire, différentes les unes des autres, voire très différentes les unes des autres.

Cette "superposition spatiale" de plusieurs faisceaux sur une même cible au même moment autorise le décalage, à une échelle de temps plus petite, des instants des impulsions de chaque cavité laser élémentaire.

### (b) Le séquencement dans le temps des diverses impulsions laser (impulsions "composites")

Il est possible de créer des salves d'impulsions, dans lesquelles les décalages temporels entre deux impulsions de deux cavités laser élémentaires sont très faibles devant le temps de récurrence entre deux salves. De telles salves peuvent être considérées comme des impulsions composites.

On peut aussi, par un décalage temporel des impulsions lumineuses, créer une pré-impulsion.

A ce sujet on pourra se reporter au document suivant qui mentionne la possibilité de créer une pré-impulsion chargée de l'allumage du plasma :
[9] Article de M. Berglund et al., Ultraviolet prepulse for enhanced X-ray emission and brightness from droplet-target laser plasma, Applied Physics Letters, vol.69, 1996, page 1683.

L'invention utilise, de préférence, ce séquencement, dans le temps, des diverses impulsions laser.

Elle permet, par exemple, le séquencement ci-après.

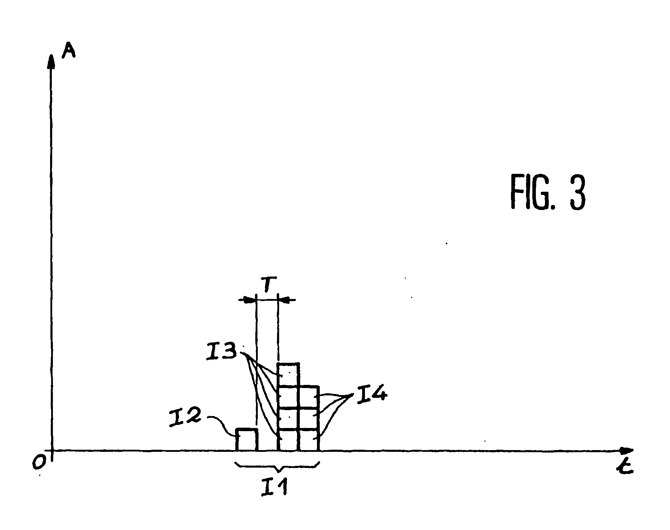

Une première impulsion très focalisée sur la cible (cette impulsion étant par exemple du genre du faisceau F1 de la figure 1) allume un plasma, puis, pendant le temps où le plasma croît, la cible est soumise à un éclairement minimal ou nul, et lorsque le plasma atteint le diamètre du faisceau F2, la cible est soumise à un maximum de puissance lumineuse. Il est alors avantageux de consacrer à la première impulsion une énergie inférieure à celle consacrée au restant de l'impulsion composite selon la Figure 3.

Sur cette figure 3, les amplitudes A des impulsions lumineuses sont représentées en fonction du temps t. On voit un exemple d'impulsion composite I1. Cette dernière comprend une pré-impulsion ("prepulse") I2 puis un premier ensemble d'impulsions élémentaires simultanées I3, séparées de la pré-impulsion par un temps T nécessaire à la croissance du plasma, puis un deuxième ensemble d'impulsions élémentaires simultanées I4 qui suit le premier ensemble.

### (c) L'utilisation de diodes continues pour le pompage du matériau-laser

Dans le cas d'une cavité laser utilisant un matériau YAG dopé avec du néodyme et un pompage continu, la durée de vie du niveau supérieur de la cavité laser, qui est voisine de 250 microsecondes, oblige à travailler à une cadence supérieure à 5 kHz pour bien extraire la puissance lumineuse déposée.

La présente invention, contrairement à l'art antérieur, permet d'obtenir des puissances crête élevées en associant un point défavorable à cette puissance crête (point c), et un point favorable (point a) dont le poids est d'autant plus important que l'on augmente le nombre de cavités laser élémentaires.

Le point (b) ne constitue qu'une possibilité d'adapter au mieux l'invention à ses applications.

Pour l'application à la micro-lithographie cette possibilité permet d'optimiser le comportement de la source EUV pompée par le dispositif laser à d'éventuelles exigences du plasma.

Toutefois, dans l'état actuel des connaissances, on considère préférable de faire arriver toutes les impulsions au même instant, à mieux que 5 ns près, voire à mieux que 1 ns près.

Dans la présente invention, on peut utiliser simultanément les points (a), (b) et (c), et cette association de points favorables et défavorables à l'obtention de puissances crête élevées va à l'encontre de l'art antérieur.

Des avantages de la présente invention, outre la génération d'impulsions laser de forte puissance et de cadence élevée, sont mentionnés ci-après.

Le coût des diodes à puissance moyenne constante est nettement inférieur lorsque ces diodes fonctionnent en continu.

En outre, un dispositif laser conforme à l'invention peut être beaucoup plus simple que ceux de l'art antérieur car ce dispositif peut fonctionner sans utiliser la mise en série d'amplificateurs.

L'exploitation et la maintenance de ce dispositif laser sont moins coûteuses du fait du nombre réduit de composants optiques utilisés.

La mise en parallèle de plusieurs oscillateurs permet plus de souplesse d'utilisation.

L'augmentation du nombre de cavités laser permet aussi à un dispositif conforme à l'invention d'être moins sensible à un incident relatif aux performances instantanées de l'une des cavités laser.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- les figures 1 et 2 illustrent schématiquement l'utilisation de deux faisceaux lasers focalisés différemment pour obtenir localement un grand éclairement et ont déjà été décrites,
- la figure 3 illustre schématiquement un exemple d'impulsion lumineuse composite utilisable dans la présente invention et a déjà été décrite,
- la figure 4 est une vue schématique de l'association de plusieurs cavités laser selon l'invention en vue de créer un dispositif d'excitation d'une source de lumière dans l'extrême ultraviolet,
- la figure 5 illustre schématiquement un mode de réalisation particulier de la cavité laser objet de l'invention, et
- les figures 6 et 7 illustrent schématiquement et partiellement d'autres exemples de l'invention, permettant un multiplexage spatial des faisceaux lasers élémentaires respectivement engendrés par plusieurs cavités laser..

### EXPOSÉ DÉTAILLÉ DE MODES DE RÉALISATION PARTICULIERS

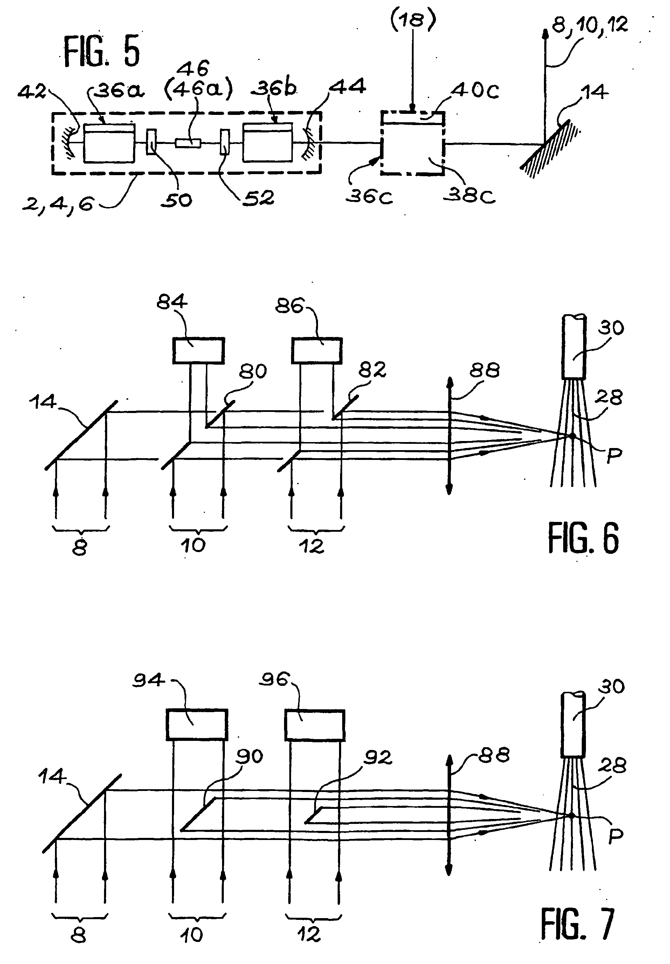

Une cavité laser conforme à l'invention est représentée par la figure 5 sur laquelle on reviendra par la suite. Elle peut être suivie d'un ou plusieurs amplificateurs simple passage.

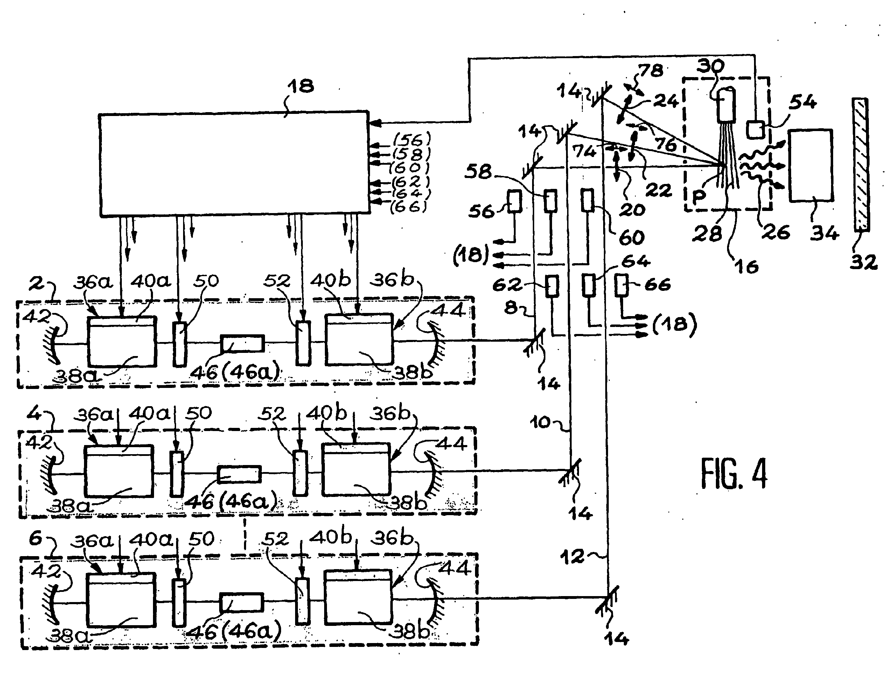

L'association de plusieurs cavités laser impulsionnelles selon l'invention en vue de créer un dispositif d'excitation d'une source de lumière dans l'extrême ultraviolet est schématiquement représentée sur la figure 4.

Le dispositif de la figure 4 comprend plus de trois cavités laser impulsionnelles, que l'on appelle aussi lasers impulsionnels, par exemple dix, mais seulement trois d'entre eux sont représentés sur cette figure 4 et ont respectivement les références 2, 4 et 6.

Les faisceaux lumineux 8, 10 et 12 (plus exactement les impulsions lumineuses), qui sont respectivement fournis par ces cavités laser impulsionnelles 2, 4 et 6, sont envoyés, par l'intermédiaire d'un ensemble de miroirs 14, sensiblement au même point P d'une cible 16 et sensiblement en même temps à ce point P.

On a également représenté les moyens 18 de commande des lasers, permettant d'obtenir les impulsions lumineuses.

On voit aussi sur la figure 4 des moyens de focalisation 20, 22 et 24 qui sont par exemple des doublets achromatiques, prévus pour focaliser respectivement les faisceaux lumineux 8, 10 et 12 sur le point P de la cible 16.

Dans l'exemple considéré, les lasers et la cible sont choisis pour fournir, par interaction des faisceaux lumineux avec cette cible, un rayonnement EUV 26. Pour ce faire, la cible comprend par exemple un jet 28 d'agrégats (par exemple de xénon) qui sont issus d'une buse 30.

On utilise par exemple ce rayonnement EUV 26 pour la microlithographie d'un circuit intégré 32. Le bloc 34 de la figure 4 symbolise les divers moyens optiques servant à mettre en forme le rayonnement EUV avant qu'il n'atteigne le circuit intégré 32.

Les lasers 2, 4 et 6 sont identiques ou quasiment identiques et aptes à fournir des impulsions lumineuses.

Chacun d'entre eux comprend deux structures de pompage 36a et 36b dont l'aberration et la biréfringence sont faibles.

La structure 36a (respectivement 36b) comprend un barreau-laser 38a (respectivement 38b) qui est pompé par un ensemble de diodes lasers 40a (respectivement 40b) fonctionnant de façon continue.

Le matériau choisi pour nos expérimentations est le Nd : YAG, dont la fluence de saturation est 200 mJ/cm²;

Néanmoins il peut être avantageux de choisir un laser différent des autres pour créer la première impulsion dite "pré-impulsion" ("prepulse").

Chaque cavité laser produit directement une puissance de 300W à 10kHz, avec une qualité de faisceau compatible avec le multiplexage, la durée d'impulsion étant de 50ns et son énergie de 300 mJ. La fluence du faisceau à la sortie de la cavité est 2,3 J/cm², soit près de 10 fois la fluence de saturation du matériau Nd : YAG.

La focalisation du faisceau produit par chacun des lasers 2, 4 et 6 sur une zone de 50µm de diamètre de la cible conduit alors à une puissance crête de 3x10¹⁰W/cm² à 6x10¹⁰W/cm².

Or, pour obtenir une émissivité suffisante sur une cible de xénon liquide, une valeur de 5x10¹¹W/cm² est typiquement l'objectif à atteindre.

Ceci est donc obtenu en combinant 10 lasers ayant les performances mentionnées ci-dessus.

Dans l'exemple de la figure 4, on n'utilise aucun amplificateur de lumière avec les lasers 2, 4 et 6.

Cependant, on peut ajouter un tel amplificateur, voire plusieurs, à la suite de chaque cavité laser si cela s'avère nécessaire pour ajuster la puissance crête, à un optimum déterminé par l'expérience.

Compte tenu des caractéristiques de la cavité laser selon l'invention, ces amplificateurs fonctionneraient avec un gain relativement faible, mais avec une extraction optimale de l'énergie déposée dans le barreau de cet amplificateur compte tenu de la fluence près de 10 fois supérieure à la fluence de saturation du matériau de ce barreau.

La figure 5 est une vue schématique d'une cavité laser impulsionnelle conforme à l'invention. Elle est constituée comme l'une quelconque des cavités 2, 4, 6 et comprend ainsi les structures 36a et 36b ainsi que les miroirs 42 et 44, le rotateur de polarisation 46 et/ou la lentille 46a et les moyens de déclenchement d'impulsions 50 et 52 dont il sera question par la suite.

Dans une variante de réalisation on place à la sortie de cette cavité laser un amplificateur de lumière 36c. Cet amplificateur 36c comprend un barreau-laser 38c à simple passage, qui est pompé par un ensemble de diodes-lasers 40c fonctionnant de façon continue.

Les moyens de commande 18 sont alors prévus pour commander cet amplificateur 36c. Ce dernier est sensiblement identique aux structures 36a et 36b et son barreau-laser 38c est, de préférence, fait du même matériau-laser que les barreaux-lasers 38a et 38b.

Ce matériau laser est choisi parmi Nd : YAG (matériau préféré), Nd : YLF, Nd : YALO, Yb : YAG, Nd : ScO₃ et Yb : Y₂O₃.

Revenons à la figure 4. Chaque cavité laser est délimitée par un premier miroir 42 hautement réfléchissant (coefficient de réflexion R égal à 100% à par exemple 1064nm) et par un deuxième miroir 44 qui est partiellement réfléchissant (R de l'ordre de 70% à 80%) pour laisser passer le faisceau lumineux engendré par cette cavité laser.

Ces miroirs sont préférentiellement courbes et leurs rayons de courbure sont calculés de manière à permettre au faisceau d'avoir une faible divergence, telle que le paramètre M² soit environ égal a 10.

De plus, la longueur de la cavité est choisie en fonction de la durée des impulsions.

Les deux miroirs courbes peuvent être remplacés par deux ensembles comprenant chacun une lentille divergente et un miroir plan.

Dans chacun des lasers 2, 4 et 6 on utilise de préférence des structures de pompage identiques pour compenser divers effets thermiques susceptibles d'apparaître. Mais il convient alors de disposer un rotateur de polarisation 46, de 90°, à un endroit quelconque entre les deux barreaux-lasers 38a et 38b.

Au lieu du rotateur 46 on peut utiliser une lentille 46a légèrement divergente, exactement à mi-chemin entre les deux barreaux.

En variante, on peut utiliser cette lentille ainsi disposée et le rotateur 46, celui-ci étant encore entre les deux barreaux, à côté de la lentille.

Le diamètre de ces barreaux-lasers est compris entre 3 mm et 6 mm.

On utilise dans nos expérimentations des barreaux de 4mm de diamètre en Nd : YAG dopé à 1,1%.

De plus, dans l'exemple de la figure 4, chaque barreau de Nd : YAG est pompé par 40 diodes lasers, chacune de ces diodes ayant une puissance de 30W et émettant à 808nm.

De préférence, afin de minimiser les aberrations sphériques, le pompage de chaque barreau est homogène.

Pour rendre chaque laser impulsionnel, on dispose dans la cavité sur le chemin du faisceau, à l'endroit où il diverge le moins, c'est à dire entre chacun des barreaux et le rotateur de polarisation, des moyens de déclenchement des impulsions acousto-optiques pour permettre un déclenchement à haute cadence de ces impulsions.

Chacun de ces déclencheurs acousto-optiques utilise un cristal en silice, travaille en mode de compression avec une puissance de radio-fréquence de 90 W à 27 MHz, cette puissance étant appliquée sur le cristal par un transducteur de 4 mm.

Dans l'exemple de la figure 4, on utilise deux déflecteurs acousto-optiques 50 et 52 du type défini ci-dessus, qui sont commandés par les moyens de commande 18 et disposés dans l'espace délimité par les barreaux-lasers 38a et 38b, de part et d'autre du rotateur de polarisation 46.

On utilise ces deux déflecteurs acousto-optiques 50 et 52 pour bloquer la cavité avec des gains correspondant à la puissance moyenne mentionnée plus haut.

Les moyens de commande 18 déclenchent le fonctionnement de la source EUV et permettent d'adapter ses caractéristiques aux besoins de la microlithographie. Le cas échéant, il déterminent la simultanéité des impulsions lumineuses des lasers 2, 4 et 6 au niveau de la cible.

Si les trajets optiques sont de longueurs significativement différentes, ils permettent, en particulier, de compenser ces différences et de gérer les déclenchements de tous les déflecteurs acousto-optiques que contient le dispositif de la figure 4 de manière à ce que le synchronisme soit réalisé pour les impulsions lumineuses.

Les moyens de commande 18 comprennent :
- des moyens (non représentés) de génération des courants d'alimentation des diodes-lasers de pompage 40a et 40b (et éventuellement 40c) et
- des moyens (non représentés) de génération de courants de radio-fréquence modulée, destinés à commander chaque couple de déflecteurs acousto-optiques 50 et 52 de manière quasiment synchrone le décalage de ces déflecteurs étant de préférence inférieur à lns.
   De plus, ces moyens de commande 18 sont prévus pour commander les lasers 2, 4 et 6 en fonction de signaux de mesure du rayonnement du plasma (engendré par interaction des faisceaux lasers avec la cible 16), fournis par un ou plusieurs capteurs appropriés tels que le capteur 54, par exemple une ou plusieurs photodiodes au silicium rapides avec filtrage spectral ; pour le rayonnement EW, ce filtrage peut être effectué par du zirconium, et par un miroir multicouche Molybdène-Silicium, éventuellement doublé ; dans le cas où l'on observe la vitesse de croissance du plasma, il convient soit de modifier ce filtrage, soit d'adjoindre une ou plusieurs autres photodiodes rapides dont le filtrage est plus proche du spectre visible.
   Les moyens de commandes 18 sont aussi prévus pour commander les lasers 2, 4 et 6 en fonction
- de signaux de mesure de l'énergie des impulsions lumineuses des lasers 2, 4 et 6, signaux qui sont respectivement fournis par des capteurs appropriés 56, 58 et 60, par exemple des photodiodes au silicium rapides avec des moyens intégrateurs, et
- de signaux de mesure des formes temporelles des impulsions lumineuses des lasers 2, 4 et 6, signaux qui sont respectivement fournis par trois capteurs appropriés 62, 64 et 66, par exemple des photodiodes au silicium rapides, qui peuvent être les mêmes capteurs que les capteurs 56, 58, 60 à ceci près que le signal est alors prélevé en amont des moyens intégrateurs.

On précise que les moyens optiques formés par les miroirs de déflexion 14 et les doublets achromatiques de focalisation 20, 22 et 24 sont choisis pour permettre une superposition spatiale avec des fluctuations de position qui sont inférieures à un faible pourcentage, par exemple de l'ordre de 1% à 10%, du diamètre de la tache focale (point P).

Le dispositif laser de la figure 4 comprend en outre des moyens prévus pour modifier la répartition spatiale de l'impulsion résultant de l'addition des impulsions lumineuses respectivement émises par les lasers 2, 4 et 6. Ces moyens, symbolisés par les flèches 74, 76 et 78, sont par exemple prévus pour déplacer les doublets achromatiques 20, 22 et 24, de manière à modifier les tailles des taches focales respectivement fournies par ces doublets.

Les moyens de commande 18 peuvent être prévus pour décaler temporellement, les unes par rapport aux autres, les impulsions lumineuses émises par les lasers 2, 4 et 6, en décalant de façon appropriée les déclenchements des lasers les uns par rapport aux autres.

Il convient de noter que le dispositif laser de la figure 4 n'est pas polarisé, contrairement à d'autres dispositifs lasers connus, par exemple ceux qui sont décrits dans le document [5].

En fait, maintenir la polarisation avec des lasers à base de Nd : YAG est difficile et complique le dispositif. Or, la conception modulaire de l'invention avec un multiplexage spatial n'impose pas que le dispositif laser soit polarisé.

Si l'on vise les plus hautes cadences de répétition, supérieure ou égale à 10kHz, il est préférable de renoncer aux variantes utilisant un multiplexage temporel. Les impulsions issues des N lasers (N=10 par exemple) arrivent alors sur la cible exactement au même moment.

Une variante de réalisation de l'invention est schématiquement et partiellement représentée sur la figure 6. Dans cette variante, on met en oeuvre un multiplexage spatial des faisceaux laser 8, 10 et 12 avant des les focaliser sur la cible P.

Pour ce faire, on remplace les deux derniers miroirs 14 (haut de la figure 4), qui sont associés aux faisceaux 10 et 12, par deux miroirs percés 80 et 82, alignés avec le dernier miroir 14 (haut de la figure 4), qui est associé au faisceau 8.

Ainsi le miroir percé 80 laisse passer une partie du faisceau 8 vers la cible et réfléchit une partie du faisceau 10 vers cette dernière. Un moyen d'arrêt de faisceau 84 est prévu pour arrêter le reste du faisceau 10 (non réfléchi vers la cible).

De même, le miroir percé 82, dont le perçage est plus grand que celui du miroir 80, laisse passer une partie des faisceaux 8 et 10 vers la cible et réfléchit une partie du faisceau 12 vers cette dernière. Un moyen d'arrêt de faisceau 86 est prévu pour arrêter le reste du faisceau 12 (non réfléchi vers la cible).
un doublet achromatique de focalisation 88 est prévu pour focaliser les faisceaux issus des miroirs alignés 14, 80 et 82 sur la cible.

Une autre variante de réalisation de l'invention est schématiquement et partiellement représentée sur la figure 7. Dans cette variante, on remplace le miroir percé 80 par un miroir à bord vif 90 prévu pour réfléchir, vers la cible, une partie du faisceau 8 vers cette cible. Un moyen d'arrêt de faisceau 94 est prévu pour arrêter le reste du faisceau 10 (non réfléchi vers la cible).

On remplace également le miroir percé 82 par un autre à bord vif 92 prévu pour réfléchir, vers la cible, une partie du faisceau incident 12, en laissant passer, à sa périphérie, une partie des faisceaux 8 et 10 vers cette cible. Un moyen d'arrêt de faisceau 96 est prévu pour arrêter le reste du faisceau 12 (non réfléchi vers la cible).

Les doublets achromatiques de focalisation 20, 22, 24 et 88 sont avantageusement étudiés pour minimiser les aberrations. Mais ils peuvent être remplacées par des miroirs courbes.

## Revendications

1. Cavité laser à milieu amplificateur solide, cette cavité laser étant impulsionnelle et pompée par des diodes fonctionnant de façon continue, la cavité laser comprenant :
- au moins deux barreaux laser,
- au moins un moyen de déclenchement d'impulsions lumineuses, et
- deux miroirs qui délimitent cette cavité, l'un étant hautement réfléchissant et l'autre partiellement réfléchissant, **caractérisée en ce que** ce moyen de déclenchement est situé dans la partie de la cavité où le faisceau laser engendré par la cavité diverge le moins.

2. Cavité laser selon la revendication 1, dans laquelle les barreaux laser sont en matériau isotrope comme le Nd : YAG ou le Yb : YAG, la cavité comportant aussi, sur le trajet du faisceau, un moyen de rotation de la polarisation, dans chacun des espaces constitués par deux barreaux successifs, cette rotation étant préférentiellement de 90°.

3. Cavité laser selon à la revendication 1, comportant aussi, au milieu de chaque intervalle entre deux barreaux adjacents, une lentille de préférence divergente.

4. Cavité laser selon la revendication 1, dans laquelle le matériau laser dont sont faits les barreaux laser est choisi dans le groupe comprenant Nd : YAG, Nd : YLF, Nd : YALO, Yb : YAG, Nd : ScO₃ et Yb : Y₂O₃.

5. Cavité laser selon l'une quelconque des revendications 1 et 2, comprenant deux barreaux (38a, 38b) sensiblement identiques en matériau laser et des moyens de rotation de polarisation placés dans la cavité entre ces deux barreaux.

6. Cavité laser selon la revendication 3, dans laquelle le moyen de déclenchement que comporte chaque cavité laser impulsionnelle comprend deux déclencheurs placés dans la cavité, de part et d'autre des moyens de rotation de polarisation, entre ces derniers et les barreaux laser.

7. Cavité laser selon l'une quelconque des revendications 1 à 4, dans laquelle le moyen de déclenchement (50, 52) est de type acousto-optique.

8. Cavité laser selon la revendication 1, suivie d'un ou plusieurs amplificateurs à simple passage.

9. Dispositif laser, **caractérisé en ce qu'**il comprend :
- au moins trois cavités laser impulsionnelles (2, 4, 6) selon l'une quelconque des revendications 1 à 3 et 8, et
- des moyens (14) d'envoi des impulsions lumineuses sensiblement au même endroit d'une cible (16) et sensiblement en même temps à cet endroit,
et **en ce que** le dispositif comprend en outre des moyens (18) de commande des cavités laser impulsionnelles, ces moyens de commande étant prévus pour un fonctionnement synchrone de tous les moyens de déclenchement que comporte le dispositif.

10. Dispositif selon la revendications 9, comprenant au moins dix cavités laser impulsionnelles (2, 4, 6) en parallèle.

11. Dispositif selon l'une quelconque des revendications 9 et 10, dans lequel les moyens d'envoi des impulsions lumineuses comprennent des moyens (80, 82, 90, 92) pour envoyer ces impulsions lumineuses sur la cible (16) suivant le même trajet.

12. Dispositif selon l'une quelconque des revendications 9 à 11, comprenant en outre des moyens (74, 76, 78) de modification de la répartition spatiale de l'impulsion lumineuse résultant de l'addition des impulsions lumineuses fournies par les cavités laser.

13. Dispositif selon l'une quelconque des revendications 9 à 12, dans lequel les moyens (18) de commande des cavités laser sont en outre aptes à modifier la répartition temporelle de l'impulsion lumineuse résultant de l'addition des impulsions lumineuses fournies par les cavités laser, afin de créer des impulsions composites.

14. Dispositif selon la revendication 13, dans lequel le profil de chaque impulsion composite comporte une première impulsion d'allumage du plasma qui est destiné à être créé par interaction des impulsions lumineuses avec la cible, un intervalle de temps où l'énergie lumineuse émise par le laser est minimale pendant la croissance du plasma, puis une seconde impulsion, composée de plusieurs impulsions élémentaires, selon une séquence fonction de la croissance du plasma.

15. Dispositif selon l'une quelconque des revendications 9 à 14, comprenant en outre des moyens (18) de modification de la cadence de récurrence des impulsions lumineuses émises par les cavités laser ou de la séquence de ces impulsions lumineuses émises par les cavités laser.

16. Dispositif selon la revendication 13, apte à envoyer un premier faisceau très focalisé (F1) sur la cible, puis à appliquer le reste de l'énergie lumineuse contenue dans l'impulsion composite sur la cible avec une focalisation plus large.

17. Dispositif selon l'une quelconque des revendications 9 à 16, dans lequel la cible (16) est prévue pour fournir une lumière dans le domaine extrême ultraviolet, par interaction avec les impulsions lumineuses émises par les cavités laser (2, 4, 6).

## Patentansprüche

1. Laserresonator mit festem Verstärkermedium, wobei dieser Laserresonator gepulst ist und gepumpt wird durch Dauerbetrieb-Dioden und dabei umfasst:
- wenigstens zwei Laserstäbe,
- wenigstens eine Lichtpulsauslösungseinrichtung und
- zwei Spiegel, welche diesen Resonator abgrenzen, wobei der eine hochreflektierend ist und der andere teilreflektierend,
**dadurch gekennzeichnet, dass** diese Auslösungseinrichtung sich in dem Teil des Resonators befindet, wo der durch den Resonator erzeugte Laserstrahl sich am wenigsten zerstreut.

2. Laserresonator nach Anspruch 1, bei dem die Laserstäbe aus isotropem Material wie etwa Nd:YAG oder Yb:YAG sind, und der Resonator auf dem Weg des Strahls auch eine Polarisationsrotationseinrichtung umfasst, wobei diese Rotation in jedem der durch zwei aufeinanderfolgende Stäbe gebildeten Räume vorzugsweise 90° beträgt.

3. Laserresonator nach Anspruch 1, der in der Mitte jedes Abstands zwischen zwei benachbarten Stäben eine Linse, vorzugsweise eine Zerstreuungslinse, umfasst.

4. Laserresonator nach Anspruch 1, bei dem das die Laserstäbe bildende Lasermaterial aus der Gruppe gewählt wird, die Nd:YAG, Nd:YLF, Nd:YALO, Yb:YAG, Nd:ScO₃ und Yb:Y₂O₃ umfasst.

5. Laserresonator nach einem der Ansprüche 1 und 2, zwei im Wesentlichen identische Stäbe (38a, 38b) aus Lasermaterial und Polarisationsrotationseinrichtungen umfassend, angeordnet in dem Resonator zwischen diesen beiden Stäben.

6. Laserresonator nach Anspruch 3, bei dem die Auslösungsvorrichtung, die jeder gepulste Laserresonator umfasst, zwei in dem Resonator angeordnete Auslöser enthält, auf beiden Seiten der Polarisationsrotationseinrichtungen, zwischen diesen letzteren und den Laserstäben.

7. Laserresonator nach einem der Ansprüche 1 bis 4, bei dem die Auslösungseinrichtung (50, 52) vom akustisch-optischen Typ ist.

8. Laserresonator nach Anspruch 1, gefolgt von einem oder mehreren Verstärkern mit einfachem Durchgang (à simple passage).

9. Laservorrichtung, **dadurch gekennzeichnet, dass** sie umfasst:
- wenigstens drei gepulste Laserresonatoren (2, 4, 6) nach einem der Ansprüche 1 bis 3 und 8, und
- Einrichtungen (14) zum Senden von Lichtpulsen, im Wesentlichen gleichzeitig und im Wesentlichen auf dieselbe Stelle eines Targets (16),
und **dadurch**, dass die Vorrichtung außerdem Einrichtungen (18) zum Steuern der gepulsten Laserresonatoren umfasst, wobei diese Steuereinrichtungen für einen Synchronbetrieb aller Auslösungseinrichtungen vorgesehen sind, welche die Vorrichtung umfasst.

10. Vorrichtung nach Anspruch 9, mit wenigstens zehn parallelgeschalteten gepulsten Laserresonatoren (2, 4, 6).

11. Vorrichtung nach einem der Ansprüche 9 und 10, bei der die Lichtpuls-Sendeeinrichtungen Einrichtungen (80, 82, 90, 92) umfassen, die diese Lichtpulse auf demselben Weg zu dem Target (16) senden.

12. Vorrichtung nach einem der Ansprüche 9 bis 11, außerdem Einrichtungen (74, 76, 78) zur Modifikation der räumlichen Verteilung des Lichtpulses umfassend, der aus der Addition der durch die Laserresonatoren gelieferten Lichtpulse resultiert.

13. Vorrichtung nach einem der Ansprüche 9 bis 12, bei der die Steuereinrichtungen (18) der Laserresonatoren außerdem fähig sind, die zeitliche Verteilung der durch die Laserresonatoren gelieferten Lichtpulse zu modifizieren, um Verbundimpulse zu erzeugen.

14. Vorrichtung nach Anspruch 13, bei der das Profil jedes Verbundimpulses einen ersten Puls zum Zünden des Plasmas, das durch Wechselwirkung der Lichtpulse mit dem Target erzeugt werden soll, ein Zeitintervall, wo die durch den Laser emittierte Lichtenergie während des Wachstums des Plasmas minimal ist, und dann einen zweiten Puls umfasst, der durch mehrere Elementarpulse entsprechend einer Sequenz gebildet wird, die abhängig ist von dem Wachstum des Plasmas.

15. Vorrichtung nach einem der Ansprüche 9 bis 14, außerdem Einrichtungen (18) zur Modifikation der Pulsfrequenz der durch die Laserresonatoren emittierten Lichtpulse oder der Sequenz dieser durch die Laserresonatoren emittierten Lichtpulse umfassend.

16. Vorrichtung nach Anspruch 13, fähig einen ersten sehr fokussierten Strahl (F1) zu dem Target zu senden und sodann den Rest der in dem Verbundimpuls enthaltenen Energie mit einer breiteren Fokussierung auf das Target zu bringen.

17. Vorrichtung nach einem der Ansprüche 9 bis 16, bei dem das Target (16) vorgesehen ist, ein Licht im extremen ultravioletten Bereich zu liefern, durch Wechselwirkung mit den durch den Laserresonator (2, 4, 6) emittierten Lichtpulsen.

## Claims

1. Optical resonator with a solid state amplifying medium, this optical resonator being pulsed and pumped by diodes operating continuously, the optical resonator comprising:
- at least two laser rods,
- at least one means of triggering light pulses, and
- two mirrors that delimit this resonator, one being highly reflecting
and the other being partly reflecting, **characterized in that** said triggering means is located in the part of the resonator in which the laser beam generated by the resonator diverges least.

2. Optical resonator according to claim 1, in which the laser rods are made of isotropic material such as Nd:YAG or Yb:YAG, the cavity also comprising a polarisation rotation means on the path of the beam in each of the spaces formed by two successive rods, this rotation preferably being 90°.

3. Optical resonator according to claim 1, also comprising a preferably divergent lens, in the middle of each interval between two adjacent rods.

4. Optical resonator according to claim 1, in which the laser material from which the laser rods are made is chosen in the group comprising Nd:YAG, Nd:YLF, Nd:YALO, Yb:YAG, Nd:ScO3 and Yb:Y₂O₃.

5. Optical resonator according to either of claims 1 and 2, comprising two rods (38a, 38b) made of a laser material, preferably substantially identical, and polarisation rotation means placed in the cavity between these two rods.

6. Optical resonator according to claim 3, in which the means of triggering pulses placed in each pulsed optical resonator comprises two Q-switches located in the cavity, on each side of the polarisation rotation means, between the polarisation rotation means and the laser rods.

7. Optical resonator according to either of claims 1 to 4, in which the triggering means (50, 52) are of the acousto-optical type.

8. Optical resonator according to claim 1, associated with one or several single pass amplifiers.

9. Laser device, **characterized in that** it comprises:
- at least three pulsed optical resonators (2, 4, 6) according to any one of claims 1 to 3 and 8, and
- means (14) for transferring these light pulses to substantially the same location on a target (16) and at substantially the same time at this location,
and **in that** the device also comprises means (18) of controlling the pulsed optical resonators, these control means being designed so that all triggering means forming part of the device operate synchronously.

10. Device according to claim 9, comprising at least ten pulsed optical resonators (2, 4, 6) in parallel.

11. Device according to any one of claims 9 and 10, in which the means of sending light pulses comprise means (80, 82, 90, 92) of sending these light pulses onto the target (16) along the same path.

12. Device according to any one of claims 9 to 11, also comprising means (74, 76, 78) of modifying the spatial distribution of the light pulse resulting from the addition of light pulses output by the optical resonators.

13. Device according to any one of claims 9 to 12, in which means (18) of controlling the optical resonators are also capable of modifying the time distribution of the light pulse resulting from the addition of light pulses supplied by the optical resonators, in order to create composite pulses.

14. Device according to claim 13, in which the profile of each composite pulse comprises a first plasma ignition pulse that will be created by interaction of the light pulses with the target, a time interval in which the light energy output by the laser is minimum during plasma growth, and then a second pulse composed of several elementary pulses according to a sequence that depends on plasma growth.

15. Device according to any one of claims 9 to 14, also comprising means (18) of modifying the recurrence rate of light pulses emitted by the optical resonators or the sequence of these light pulses emitted by the optical resonators.

16. Device according to claim 13, capable of sending a first highly focused beam (F1) onto the target and then applying the remainder of the light energy onto the target with broader focusing.

17. Device according to any one of claims 9 to 16, in which the target (16) is designed to output light in the extreme ultraviolet domain by interaction with the light pulses emitted by the optical resonators (2, 4, 6).
